# EUROPEAN PATENT SPECIFICATION

(11) **EP 2 182 752 B1**
(45) Date of publication and mention of the grant of the patent: **18.06.2014**
(21) Application number: 09174547.1
(22) Date of filing: 29.10.2009
(51) Int. Cl.: H04W 8/00, H04W 48/08, H04W 64/00

(54) **System and method for automatically counting the number of people in an area**
System und Verfahren zum automatischen Zählen der Anzahl der Menschen in einem Gebiet
Système et procédé pour compter automatiquement le nombre de personnes dans une zone

(30) Priority: 30.10.2008 ES 200803089
(43) Date of publication of application: 05.05.2010
(73) Proprietor: Vodafone Group PLC, Newbury Berkshire RG14 2FN (GB); Vodafone España, S.A., 28108 Alcobendas (ES)
(72) Inventor: Almodovar Herraiz, Daniel, 28050, Madrid (ES); Martin Briega, Alberto, 28050 Madrid (ES)
(74) Representative: Boult Wade Tennant

(56) References cited:
- EP-A2- 1 482 759
- WO-A2-98/15133
- "Digital cellular telecommunications system (Phase 2+); Universal Mobile Telecommunications System (UMTS); Location management procedures (3GPP TS 23.012 version 7.3.0 Release 7); ETSI TS 123 012" ETSI STANDARDS, LIS, SOPHIA ANTIPOLIS CEDEX, FRANCE, vol. 3-CN2;3-CN4, no. V7.3.0, 1 June 2007 (2007-06-01), XP014037696 ISSN: 0000-0001
- "3rd Generation Partnership Project; Technical Specification Group Core Network and Terminals; Mobile radio interface Layer 3 specification; Core network protocols; Stage 3 (Release 7)", 3GPP STANDARD; 3GPP TS 24.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.13.0, 1 September 2008 (2008-09-01) , pages 1-550, XP050364465,

## Description

### Field of the invention

The present invention lies in the field of mobile communications, and more specifically in providing a set of techniques to manage automatically and accurately counting the number of people in an area by using mobile communications means, using information provided by the mobile telephones carried by the subscribers.

### Background of the invention

In certain scenarios, knowing the number of people in a place (exact or estimated) can be very relevant. One example is train carriages, where the train authorities can use that number to better dimension the service. Other examples are street demonstrations, especially for protesting, where government, politicians and media discuss heavily, often providing very different numbers for a same event favourable to their position.

When the places are closed or controlled, i.e. access is restricted by tickets or through a few number of gates, people can be counted. However, in those scenarios with open places of uncontrolled access, such as the street or some trains, this is quite difficult. Even in controlled places of large size (e.g. underground network), there isn't an easy way to know the number of people in a certain small area once they passed through the entry gate.

Current solutions in those scenarios are not accurate and automatic at the same time. They can be accurate but requiring slow manual counting (e.g. train staff going carriage by carriage). They can be semi-automated but leading to non-guaranteed accuracy (e.g. helicopter taking photos of the street and then estimating a density of people per square meter to apply to the demonstration area).

Document US2003010822 discloses a method and system for electronic route planning and virtual queue handling, proposing a system for queues management in a theme park. Specially prepared handsets are issued to the users so that these handsets can be counted: the counting mechanism uses a short range wireless connection such as Bluetooth [RTM].

From document US2004158482 is known a method for managing the flow of persons in relation to centres of crowd concentration via wireless control. It is related to the control of crowds and queues at theme parks, where the mobile phone is used only as a tool to enter what attractions the user wants to visit.

Document US2002183069 discloses a method and system for mobile station positioning in cellular communication networks for detecting and counting mobile phones based on the existing base stations of the cellular network, e.g. ITS (Intelligent Transportation Systems).

From document EP1779133-A1 , it is known to monitor the movement of mobile communication devices by using a plurality of receiver units (probes), distributed in the coverage area, that detect all the current transmissions from a mobile device to a base station.

WO 98/15133 describes a method of controlling subscriber registrations. Mobile subscribers are divided into subscriber groups, and subscriber registration quotas. A limited percentage of the total registration capacity is allocated to each of the subscriber groups by the operator.

It is well-known that abbreviations and acronyms are frequently used in the mobile telephony field. Below is a glossary of acronyms/terms used throughout the present specification:

| | |
|---|---|
| 3GPP | The 3rd Generation Partnership Project |
| BSC | Base Station Controller |
| BTS | Base Transceiver Station |
| GSM | Global System for Mobile Communications |
| IMSI | International Mobile Subscriber Identity |
| IP | Internet Protocol |
| ITS | Intelligent Transportation Systems |
| MSC | Mobile Switching Centre |
| LAC | Location Area Code |
| RNC | Radio Network Controller |
| SMS | Short Message Service |
| TIMSI | Temporary International Mobile Subscriber Identity |
| UMTS | Universal Mobile Telecommunications System |

### Summary of the invention

The invention relates to a method and system for automatically counting the number of people in an area according to claim 1 and claim 8, respectively. Preferred embodiments of the method are defined in the dependent claims.

In the present method for automatically counting people, said people are carrying a functioning mobile phone. A "functioning" mobile phone is a device that is "switched-on" and capable of connecting to at least one mobile telecommunications network over at least one radio access technology, typically in IDLE or ACTIVE mode. The method comprises:
- broadcasting, in the licensed spectrum of at least one mobile network operator and from at least one local unit, each one located at an area where people is to be counted, the coverage area, a LAC different from any other LAC of the radio cells of the mobile network in the surroundings;
- establishing each local unit a Location Update dialogue with any mobile phone answering to the LAC broadcast, obtaining from each answering mobile phone its IMSI number;
- sending each local unit a Location Updating Reject message to each mobile phone whose IMSI number has been obtained;
- counting the different IMSI numbers received (discarding or not the duplicated IMSI numbers received during a predetermined period of time before);
- calculating an estimated number of people in the coverage area using additional information, for instance stored in a database.

Each local unit can broadcast the same LAC continuously, leading to a continuous mode, or different LACs each time, leading to a pulse mode, where counting is done in pulses.

The coverage area each local unit can preferably be configurable through at least one of the following parameters: the transmission power to modify the reach and/or the radiation pattern of the antenna system to modify the shape of the coverage area.

In a preferred embodiment, where there is a plurality of local units, the method comprises receiving a processing unit the counting of the different IMSI numbers for each coverage area from the different local units, the calculation of the estimated number of people in each corresponding coverage area being carried out in said processing unit with access to the additional information.

The additional information can comprise at least one of the following information:
- the percentage of switched-on mobile phones versus people in the country, region, city or neighbourhood where the corresponding local unit is located;
- the market share of the selected mobile network operator in the country, region, city or neighbourhood where the corresponding local unit is located.

The present invention also comprises a system for automatically counting the number of people in an area, said people carrying a switched-on mobile phone. The system comprises:
- at least one local unit provided with cellular radio transceiver means for transmitting and receiving signals in the licensed spectrum of at least one mobile network operator, each local unit being located at an area where people is to be counted, the coverage area, and being configured for:
   - broadcasting a LAC different from any other LAC of the radio cells of the mobile network in the surroundings;
   - establishing a Location Update dialogue with any mobile phone answering to the LAC broadcast, obtaining from each answering mobile phone its IMSI number;
   - sending a Location Updating Reject message to each mobile phone whose IMSI number has been obtained;
   - counting the different IMSI numbers received;
   - sending said counting to a processing unit;
- a processing unit comprising calculating means configured for calculating an estimated number of people in each coverage area using additional information (for instance stored in a database).

Each local unit can be configured for broadcasting the same LAC continuously, broadcasting different LACs each time, or changing between broadcasting the same LAC continuously or broadcasting different LACs each time, according to the type of counting carried out (continuous mode or pulse mode).

Each local unit comprises preferably means for configuring at least one of the following parameters that determines its corresponding coverage area:
- the transmission power to modify the reach;
- the radiation pattern of the antenna system to modify the shape of the coverage area.

In a preferred embodiment, in which the processing unit is remote to the at least one local unit, the processing unit comprises management means configured for remotely managing the at least one local unit.

The processing unit can comprise interface means through which third parties externally retrieve the calculation of the estimated number of people in each coverage area.

Unlike the prior art discussed above, the claimed method and system are thus simultaneously automated and accurate. Both system and method make use of standard cellular mechanisms to count the number of functioning mobile phones in an area, irrespective of the mobile network to which they are connected. The inventive system may be considered as a "box" that captures mobile phone identities and counts their number.

In many cases, it is a fair assumption that nearly everybody carries at least one mobile phone or other cellular enabled device - as a result simply counting these devices provides an accurate estimate of the number of people. Where this assumption does not hold, the count may be treated as a representative sample, the true number of people present being estimated as the counted number divided by the percentage of people known to carry a mobile phone in the local population.

As noted previously, there are prior art disclosures of handset counting methods (see US2003010822): these require dedicated handsets. The inventive method, by contrast, makes use of standard mobile phones. Therefore, while it may be known to count people or assets using technologies, such as Bluetooth, the same mechanisms would not work with every standard mobile phone.

Other prior art (US2002183069) uses the functionalities of conventional base stations to count accessible mobile phones. The inventive solution describes a dedicated counting device that need not be associated with any one (or just one) network operator. Making a similar count using the prior art base station method would require access to each of the base stations of the respective network operators and (as these base stations would generally serve different coverage areas) even then the count would not be as accurate as with the inventive solution. Furthermore, the use of a local "box", compared to the cellular base stations, enables not only much smaller counting areas but also tuning and shaping that area according to every particular case.

A further advantage of the present invention is that the method applies to all handsets functioning on a given radio access technology.

In prior art solutions such as EP1779133, standard mobile phones with active calls are counted by using special sensing boxes that are passive radio probes. These solutions only work for a subset of devices, since they only count devices having active communications (such as voice calls, SMS or Internet browsing) to determine the number of people in a specific location.

The inventive method counts people who are carrying a functioning mobile phone, but it is not necessary for the method to work that these subscribers are having an active communication in their mobile phones (making a call or sending SMS): nor is it necessary that the subscribers be subscribers to the same network operator. This is achieved by using special sensing boxes that are not base stations of any particular mobile network and are not passive radio probes either.

In summary then the method comprises broadcasting a location identifier (LAC) different from any other LAC of the radio cells of the mobile network in the surroundings from at least one local unit (1,1',1"), within a coverage area (4,4',4"); establishing a Location Update dialogue with any mobile phone (3,3',3") answering to the LAC broadcast; obtaining from each answering mobile phone (3,3',3") its IMSI number; sending a Location Updating Reject message to each mobile phone (3,3',3") whose IMSI number has been obtained; counting the different IMSI numbers received; and calculating an estimated number of people in the coverage area (4,4',4") on the basis of this count and, optionally, the known prevalence of mobile telephone devices per person.

### Brief description of the drawings

To complete the description and, in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:

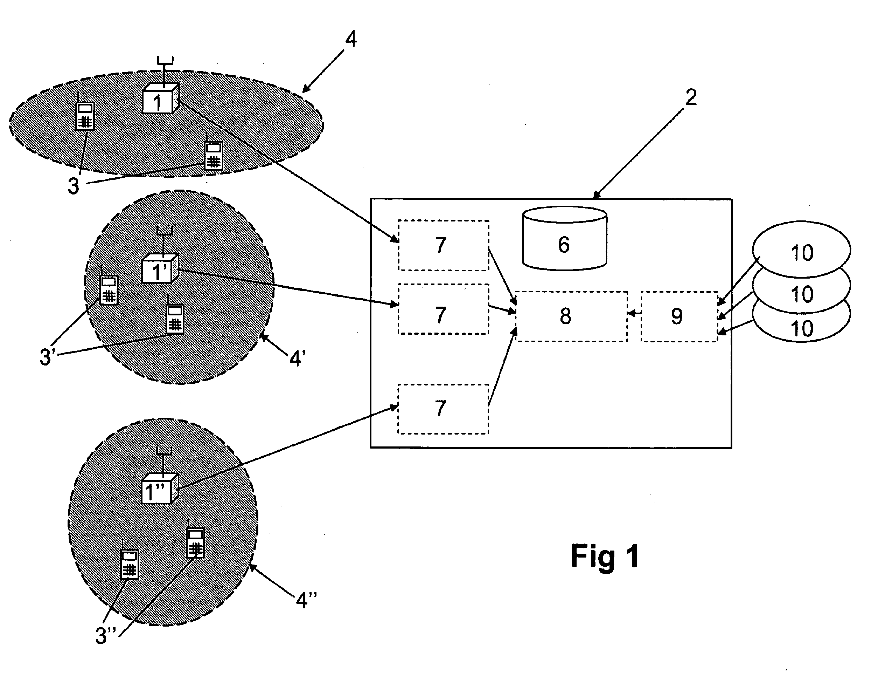

Figure 1 shows a basic diagram of the system object of invention.

### Detailed description of the preferred embodiments

The system, represented schematically in Figure 1, is composed of at least one local unit (1,1',1") and a processing unit 2, local or remote to the previous one.

The local unit (1,1',1") has the following functions:
- An identity capture function that uses standard cellular mechanisms (similar to the ones in existing BTS and BSC/RNC). It broadcasts system information with a certain LAC (Location Area Code), forcing the mobile phones (3,3',3") of the same network within its reach area, the coverage area (4,4',4"), to send a Location Update message. It captures then the identity (e.g. IMSI) of those phones (3,3',3") and sends back a Location Update reject message to avoid further disturbing the phones (during a certain period chosen by the operator or until they are switched off). The radiation pattern of the antenna system can be modified to shape the coverage area (4,4',4") convenient to the particular use case.

This identity capture function can have two modes of operation:
(a) continuous, where it is operating (i.e. transmitting, receiving and capturing) all the time, or
(b) pulse, where it is generally deactivated and it is activated only for short periods of time in order to capture identities during it.

The LAC broadcasted by the node can be replaced by another one in order to force again all handsets to send a Location Update message - this can be done in both modes of operation, although it fits especially the pulse mode.
- A counting function, which in coordination with the previous function, counts the accumulated number of different identities that have performed a Location Update process. After a change of LAC, depending on the particular use case, this function can discard the same identities captured before or on the contrary consider them as different for counting purposes (e.g. how many people are in a train carriage at 8:00, at 9:00, at 10:00, etc.). Then, the counting function converts cellular identities (IMSI) into numbers. It can be as simple as a mere counter, although it can include intelligence for detecting the duplication of identities (e.g. a user switches off and on his phone) and not counting it twice. It should work in coordination with the mode of operation (continuous or pulse) of the previous function.

On the other hand, the processing unit 2 has the following functions:
- A calculating function, carried out through calculating means 7, which receives the data from the counting function and calculates the number of people in the area, based on additional information in a database. This additional information can be, for instance, (a) the percentage of switched-on mobile phones versus people in that country, region, city or neighbourhood; (b) in case of a single-operator system, the market share of the selected mobile operator in that country, region, city or neighbourhood.
- Optionally, a concentrator function, carried out through management means 8, that manages the flows of information coming from the different locations. Every flow would be composed of the identity capture function (with includes a local unit for radio transmissions), the counting function and the calculating function. There could be many flows running in parallel, corresponding to multiple locations or sources (e.g. train stations, museums, streets). Besides, the concentrator would perform the remote management of local units (e.g. changing LAC value, adjusting transmission power). The alternative for not having this concentrator would be operating the previous functions in a standalone mode and then using the results off-line. For instance, storing the figures of museum visitors in a hard drive during a day and then loading them in a PC for their analysis by the museum's owners.
- Optionally, a gateway function, carried out through interface means 9, which provides the interface to third parties 10 that are going to use that information, enable the management of campaigns for counting people, etc. It should work together with the concentrator, e.g. to be able to order actions on the local units according to the requirements of the campaigns.

The function for capturing cellular identities (identity capture function) must always include a unit local to the venue (e.g. train carriage, train station, street) for radio transmissions and besides may have part of its functionality located remotely in the network. This function replicates a standard cellular mechanism for the dialogue with mobile phones within its reach. In particular, this local unit broadcasts specific system information as if it was a BTS (base station) and forces a Location Update message by all mobile phones within its reach belonging to its cellular network. Then, the function captures the identity of those phones, such as the IMSI, and rejects the Location Update attempts, hence not disturbing the mobile phones further. This behaviour is based on well-known standard cellular procedures for GSM and UMTS and the local unit 1 can be built based on existing picocell technology with a very low cost (e.g. below 200 euros). Location Update procedures are described in detail in ETSI 123 909 V4.0.0 (2001-03), a technical report from the European Telecommunications Standards Institute and 3GPP TS 23.012, from the 3rd Generation Partnership Project.

Additional details of this identity capture function are described here:
- The function (composed of the local unit plus optionally some intelligence in network systems) implements a small subset of the functionality of a BTS, BSC/RNC and MSC, in particular the one described below.
- The local unit 1 transmits and receives in the licensed spectrum of a mobile network operator. This local unit 1 broadcasts system information in the radio interface towards the mobile phones using the standard procedures and channels for that purpose. As part of its Cell Global identity, this unit broadcasts a LAC (Location Area Code) that is different from any LAC of the real cells of the mobile network in the surroundings (e.g. the operator can book special Location Area Codes for the road usage charging service).
- Due to the standard behaviour in any mobile phone, when a phone detects this Location Area Code because it enters under coverage of the unit, the mobile phone will initiate a Location Update dialogue with the unit.
- The function (local unit and/or network systems) will respond to that dialogue and, again following standard procedures, will force the phone to provide its IMSI number (note that even if the phone answers first with the TIMSI number, which is a temporal identity, the function can still request the phone to provide the IMSI number).
- Once obtained the IMSI number, the function will finish the dialogue sending a Location Updating Reject message to the phone with a rejection cause that will make the phone not trying again a Location Update dialogue with the function during a known timer (e.g. 2 hours) or as long as the phone keeps switched on (e.g. the latter is feasible in GSM with the rejection cause is "Roaming not allowed in this location area"). This means that the mobile phone will ignore the radio transmissions of the local unit from this moment on and will not try to connect with it even it is still under the coverage of the unit, unless the period expires or the phone is switched off and switched on again within that coverage.

The coverage area (4,4',4") of the local unit (1,1',1") can be configured based on two aspects: first, the transmission power, which determines the reach; second, the features of the antenna system (e.g. radiation pattern, gain, downtilt), which determine the shape of the coverage. Both aspects can be statically or dynamically modified to shape a particular area that is convenient to the counting scenario, e.g. a set of train carriages.

The operating parameters of the unit (e.g. Location Area Code, transmitting power, antenna system) could be configured locally or remotely via a typical remote Operation & Maintenance system (e.g. based on IP protocols).

As mentioned before, this function for capturing identities could be entirely local (i.e. all the procedure replicating BTS, BSC/RNC and MSC can be managed by the local unit, acting standalone) or can be a combination of local unit plus network equipment (some parts or the procedure done locally and others remotely). In any case, a local unit is always required for radio transmissions.

The features explained above enable interesting functions for the counting scenario. For instance, the function could work either in continuous mode or in pulse mode. The first one means that the LAC is maintained fixed and hence the function is continuously capturing the identities of the new mobile users that enters the area of coverage (e.g. accumulated visits of a museum during a day). The second one can be obtained by a change of LAC in the function, which will force again all the mobile phones around (old and new) to register again and hence be captured (e.g. snapshot of the number of visitors in a museum at 9:00, at 10:00, at 11:00, etc.).

The local unit can be fixed (e.g. installed in a train station) or mobile (e.g. installed in a train carriage or in a helicopter).

In case of a multi-operator scenario, some parts of the unit should be duplicated per operator whereas others can be shared (e.g. antenna system).

In terms of physical equipment, in a typical installation there would be local units located at the areas where people has to be counted and one or several network servers performing one of several functions (typically gateway and concentrator, but also can do calculating, counting and part of the identity capture). Figure 1 offers an illustrative view of how functions could be distributed in an architecture with gateway and concentrator.

## Claims

1. Method for automatically counting the number of people in an area, said people carrying a switched-on mobile phone, the method comprising the steps of:
broadcasting a LAC over a coverage area (4, 4', 4"), in the licensed spectrum of at least one mobile network operator and from at least one local unit (1, 1', 1 "), each of said local units (1, 1', 1 ") being located at an area where people are to be counted, said broadcast LAC being different from any LAC of the real radio cells of the mobile network in the surroundings;
establishing at each local unit (1, 1', 1 ") a Location Update dialogue with any mobile phone (3, 3', 3") answering to the LAC broadcast, obtaining from each answering mobile phone (3, 3', 3") its IMSI number;
sending from each local unit (1, 1', 1") a Locating Updating Reject message to each mobile phone (3, 3', 3") whose IMSI number has been obtained;
counting the different IMSI numbers received; and
calculating an estimated number of people in the coverage area (4, 4', 4") using additional information, wherein the at least one local unit (1, 1', 1") is not a base station of any mobile network.

2. Method for automatically counting the number of people in an area according to claim 1, **characterised in that** it additionally comprises, for the count carried out in the step of counting the different IMSI numbers received, discarding the duplicated IMSI numbers received during a predetermined period of time before.

3. Method for automatically counting the number of people in an area according to any of claims 1-2, **characterised in that** the at least one local unit (1, 1', 1") broadcasts the same LAC continuously.

4. Method for automatically counting the number of people in an area according to any of claims 1-2, **characterised in that** the at least one local unit (1, 1', 1 ") broadcasts different LACs each time.

5. Method for automatically counting the number of people in an area according to any of previous claims, **characterised in that** the coverage area (4, 4', 4") of the at least one local unit (1, 1', 1") is configurable through at least one of the following parameters:
the transmission power to modify the reach;
the radiation pattern of the antenna system to modify the shape of the coverage area (4).

6. Method for automatically counting the number of people in an area according to any of previous claims, in which there is a plurality of local units (1, 1', 1"), **characterised in that** it comprises receiving at a processing unit (2) counts of the different IMSI numbers for each coverage area (4, 4', 4") from the different local units (1, 1', 1"), the calculation of the estimated number of people in each corresponding coverage area (4, 4', 4") being carried out in said processing unit (2) with access to the additional information.

7. Method for automatically counting the number of people in an area according to any of previous claims, **characterised in that** the additional information comprises at least one of the following:
the percentage of switched-on mobile phones versus people in the country, region, city or neighbourhood where the corresponding local unit (1, 1', 1 ") is located;
the market share of the selected mobile network operator in the country, region, city or neighbourhood where the corresponding local unit (1, 1', 1 ") is located.

8. System for automatically counting the number of people in an area, said people carrying a switched-on mobile phone comprising:
at least one local unit (1, 1', 1") provided with cellular radio transceiver means for transmitting and receiving signals in the licensed spectrum of at least one mobile network operator, each local unit (1, 1', 1 ") being located at an area where people are to be counted, and being configured for:
broadcasting over a coverage area (4, 4', 4") a LAC different from any LAC of the real radio cells of the mobile network in the surroundings;
establishing a Location Update dialogue with any mobile phone (3, 3', 3") answering to the LAC broadcast, obtaining from each answering mobile phone (3, 3', 3") its IMSI number;
sending a Locating Updating Reject message to each mobile phone (3, 3', 3") whose IMSI number has been obtained;
counting the different IMSI numbers received;
sending said counting information to a processing unit (2);
a processing unit (2) comprising calculating means (7) configured for calculating an estimated number of people in each coverage area (4, 4', 4") using additional information, wherein the at least one local unit (1, 1', 1") is not a base station of any mobile network.

9. System for automatically counting the number of people in an area according to claim 8, **characterised in that** the at least one local unit (1, 1', 1 ") is additionally configured for, when counting the different IMSI numbers received, discarding the duplicated IMSI numbers received during a predetermined period of time before.

10. System for automatically counting the number of people in an area according to any of claims 8-9, **characterised in that** the at least one local unit (1, 1', 1") is configured for broadcasting the same LAC continuously.

11. System for automatically counting the number of people in an area according to any of claims 8-9, **characterised in that** the at least one local unit (1, 1', 1 ") is configured for broadcasting different LACs each time.

12. System for automatically counting the number of people in an area according to any of claims 8-9, **characterised in that** the at least one local unit (1, 1', 1 ") is configured for changing between broadcasting the same LAC continuously or broadcasting different LACs each time, according to the type of counting carried out.

13. System for automatically counting the number of people in an area according to any of claims 8-12, **characterised in that** the at least one local unit (1, 1', 1") comprises means for configuring at least one of the following parameters that determines its corresponding coverage area (4, 4', 4"):
the transmission power to modify the reach;
the radiation pattern of the antenna system to modify the shape of the coverage area (4).

14. System for automatically counting the number of people in an area according to any of claims 8-13, in which the processing unit (2) is remote to the at least one local unit (1, 1', 1"), **characterised in that** the processing unit (2) comprises management means (8) configured for remotely managing the at least one local unit (1, 1', 1").

15. System for automatically counting the number of people in an area according to any of claims 8-14, **characterised in that** the processing unit (2) comprises interface means (9) through which third parties (10) externally retrieve the calculation of the estimated number of people in each coverage area (4, 4', 4").

## Patentansprüche

1. Verfahren zum automatischen Zählen der Menschen in einem Bereich, wobei die genannten Menschen ein eingeschaltetes Mobiltelefon bei sich tragen, wobei das Verfahren die folgenden Schritte beinhaltet:
Broadcasten eines LAC über einen Versorgungsbereich (4, 4', 4") im lizensierten Spektrum wenigstens eines Mobilnetzbetreibers und von wenigstens einer lokalen Einheit (1, 1', 1 "), wobei sich jede der genannten lokalen Einheiten (1, 1', 1 ") in einem Bereich befindet, in dem Menschen gezählt werden sollen, wobei sich der genannte gebroadcastete LAC von jedem LAC der echten Funkzellen des Mobilfunknetzes in der Umgebung unterscheidet;
Einrichten eines Location-Update-Dialogs an jeder lokalen Einheit (1, 1', 1") mit jedem Mobiltelefon (3, 3', 3"), das auf das LAC-Broadcast antwortet, Einholen der IMSI-Nummer von jedem antwortenden Mobiltelefon (3, 3', 3");
Senden einer Locating Updating Reject Nachricht von jeder lokalen Einheit (1, 1', 1") zu jedem Mobiltelefon (3, 3', 3"), dessen IMSI-Nummer erhalten wurde;
Zählen der verschiedenen empfangenen IMSI-Nummern; und
Berechnen einer geschätzten Anzahl von Menschen in dem Versorgungsbereich (4, 4', 4") anhand von zusätzlichen Informationen, wobei die wenigstens eine lokale Einheit (1, 1', 1") keine Basisstation eines Mobilfunknetzes ist.

2. Verfahren zum automatischen Zählen der Menschen in einem Bereich nach Anspruch 1, **dadurch gekennzeichnet, dass** es zusätzlich für das im Zählschritt durchgeführte Zählen der verschiedenen empfangenen IMSI-Nummern das Verwerfen der duplizierten IMSI-Nummern beinhaltet, die während einer vorbestimmten Zeitperiode davor empfangen wurden.

3. Verfahren zum automatischen Zählen der Menschen in einem Bereich nach einem der Ansprüche 1-2, **dadurch gekennzeichnet, dass** die wenigstens eine lokale Einheit (1, 1', 1') denselben LAC kontinuierlich broadcastet.

4. Verfahren zum automatischen Zählen der Menschen in einem Bereich nach einem der Ansprüche 1-2, **dadurch gekennzeichnet, dass** die wenigstens eine lokale Einheit (1, 1', 1") jedes Mal verschiedene LACs broadcastet.

5. Verfahren zum automatischen Zählen der Menschen in einem Bereich nach einem der vorherigen Ansprüche, **dadurch gekennzeichnet, dass** der Versorgungsbereich (4, 4', 4") der wenigstens einen lokalen Einheit (1, 1', 1 ") mit wenigstens einem der folgenden Parameter konfiguriert werden kann:
die Sendeleistung zum Modifizieren der Reichweite;
das Strahlungsdiagramm des Antennensystems zum Modifizieren der Form des Versorgungsbereichs (4).

6. Verfahren zum automatischen Zählen der Menschen in einem Bereich nach einem der vorherigen Ansprüche, bei dem mehrere lokale Einheiten (1, 1', 1") vorhanden sind, **dadurch gekennzeichnet, dass** es das Empfangen, an einer Verarbeitungseinheit (2), von Zahlen für die unterschiedlichen IMSI-Nummern für jeden Versorgungsbereich (4, 4', 4") von den verschiedenen lokalen Einheiten (1, 1', 1") beinhaltet, wobei die Berechnung der geschätzten Zahl von Menschen in jedem entsprechenden Versorgungsbereich (4, 4', 4") in der genannten Verarbeitungseinheit (2) mit Zugang zu den zusätzlichen Informationen durchgeführt wird.

7. Verfahren zum automatischen Zählen der Menschen in einem Bereich nach einem der vorherigen Ansprüche, **dadurch gekennzeichnet, dass** die zusätzlichen Informationen wenigstens eines der Folgenden beinhalten:
den Prozentanteil der eingeschalteten Mobiltelefone gegenüber den Menschen in dem Land, der Region, der Stadt oder der Gemeinde, in dem/der sich die entsprechende lokale Einheit (1, 1', 1") befindet;
den Marktanteil des ausgewählten Mobilnetzbetreibers in dem Land, der Region, der Stadt oder der Gemeinde, in dem/der sich die entsprechende lokale Einheit (1, 1', 1") befindet.

8. System zum automatischen Zählen der Menschen in einem Bereich, wobei die genannten Menschen ein eingeschaltetes Mobiltelefon bei sich tragen, das Folgendes umfasst:
wenigstens eine lokale Einheit (1, 1', 1''), die mit zellulären Funktransceivern zum Senden und Empfangen von Signalen in dem lizensierten Spektrum von wenigstens einem Mobilnetzbetreiber versehen ist, wobei sich jede lokale Einheit (1, 1', 1 ") in einem Bereich befindet, in dem Menschen gezählt werden sollen , und konfiguriert zum:
Broadcasten, über einen Versorgungsbereich (4, 4', 4") eines LAC, der sich von jedem LAC der echten Funkzellen des Mobilfunknetzes in der Umgebung unterscheidet;
Einrichten eines Location Update Dialogs mit jedem Mobiltelefon (3, 3', 3"), das auf das LAC-Broadcast antwortet, Einholen der IMSI-Nummer von jedem antwortenden Mobiltelefon (3, 3', 3");
Senden einer Locating Updating Reject Nachricht zu jedem Mobiltelefon (3, 3', 3"), dessen IMSI-Nummer erhalten wurde;
Zählen der verschiedenen empfangenen IMSI-Nummern;
Senden der genannten Zählinformation zu einer Verarbeitungseinheit (2) ;
eine Verarbeitungseinheit (2), die Rechenmittel (7) umfasst, die zum Berechnen einer geschätzten Anzahl von Menschen in jedem Versorgungsbereich (4, 4', 4") anhand von zusätzlichen Informationen konfiguriert sind, wobei die wenigstens eine lokale Einheit (1, 1',1") keine Basisstation eines Mobilfunknetzes ist.

9. System zum automatischen Zählen der Menschen in einem Bereich nach Anspruch 8, **dadurch gekennzeichnet, dass** die wenigstens eine lokale Einheit (1, 1', 1") zusätzlich zum Verwerfen, beim Zählen der verschiedenen empfangenen IMSI-Nummern, der empfangenen duplizierten IMSI-Nummern konfiguriert ist, die während einer vorbestimmten Zeitperiode davor erhalten wurden.

10. System zum automatischen Zählen der Menschen in einem Bereich nach einem der Ansprüche 8-9, **dadurch gekennzeichnet, dass** die wenigstens eine lokale Einheit (1, 1', 1") zum kontinuierlichen Broadcasten desselben LAC konfiguriert ist.

11. System zum automatischen Zählen der Menschen in einem Bereich nach einem der Ansprüche 8-9, **dadurch gekennzeichnet, dass** die wenigstens eine lokale Einheit (1, 1', 1") zum Broadcasten von jeweils unterschiedlichen LACs konfiguriert ist.

12. System zum automatischen Zählen der Menschen in einem Bereich nach einem der Ansprüche 8-9, **dadurch gekennzeichnet, dass** die wenigstens eine lokale Einheit (1, 1', 1") zum Wechseln zwischen kontinuierlichem Broadcasten desselben LAC und jeweils Broadcasten von unterschiedlichen LACs gemäß dem jeweils durchgeführten Zähltyp konfiguriert ist.

13. System zum automatischen Zählen der Menschen in einem Bereich nach einem der Ansprüche 8-12, **dadurch gekennzeichnet, dass** die wenigstens eine lokale Einheit (1, 1', 1 ") Mittel zum Konfigurieren von wenigstens einem der folgenden Parameter beinhaltet, der seinen entsprechenden Versorgungsbereich (4, 4',4") bestimmt:
die Sendeleistung zum Modifizieren der Reichweite;
das Strahlungsdiagramm des Antennensystems zum Modifizieren der Form des Versorgungsbereichs (4).

14. System zum automatischen Zählen der Menschen in einem Bereich nach einem der Ansprüche 8-13, wobei die Verarbeitungseinheit (2) fern von der wenigstens einen lokalen Einheit (1, 1', 1 ") ist, **dadurch gekennzeichnet, dass** die Verarbeitungseinheit (2) Management-Mittel (8) umfasst, die zum Femverwalten der wenigstens einen lokalen Einheit (1, 1', 1 ") konfiguriert sind.

15. System zum automatischen Zählen der Menschen in einem Bereich nach einem der Ansprüche 8-14, **dadurch gekennzeichnet, dass** die Verarbeitungseinheit (2) Schnittstellenmittel (9) umfasst, durch die Fremdparteien (10) extern die Berechnung der geschätzten Anzahl von Menschen in jedem Versorgungsbereich (4, 4', 4") abrufen.

## Revendications

1. Procédé destiné à compter automatiquement le nombre de personnes dans une zone, lesdites personnes portant un téléphone portable activé, le procédé comprenant les étapes consistant à :
diffuser un LAC sur une zone de couverture (4, 4', 4"), dans le spectre sous licence d'au moins un opérateur de réseau mobile et à partir d'au moins une unité locale (1, 1', 1 "), chacune desdites unités locales (1, 1', 1") étant localisée au niveau d'une zone où des personnes sont censées être comptées, ledit LAC diffusé étant différent de n'importe quel LAC des cellules radio réelles du réseau mobile dans les environs ;
établir, au niveau de chaque unité locale (1, 1', 1 "), un dialogue de mise à jour de localisation avec n'importe quel téléphone portable (3, 3', 3") qui répond à la diffusion du LAC, en obtenant de chaque téléphone portable répondant (3, 3', 3") son numéro IMSI ;
envoyer, à partir de chaque unité locale (1, 1', 1"), un message de rejet de mise à jour de localisation à chaque téléphone portable (3, 3', 3") dont le numéro IMSI a été obtenu ;
compter les différents numéros IMSI ayant été reçus ; et
calculer un nombre estimé de personnes dans la zone de couverture (4, 4', 4") grâce à l'utilisation d'informations additionnelles, cas dans lequel ladite au moins une unité locale (1, 1', 1") n'est pas une station de base d'un quelconque réseau mobile.

2. Procédé destiné à compter automatiquement le nombre de personnes dans une zone selon la revendication 1, **caractérisé en ce qu'**il comprend additionnellement, pour le décompte réalisé lors de l'étape de comptage des différents numéros IMSI reçus, l'opération consistant à éliminer les numéros IMSI dédoublés ayant été reçus au cours d'un intervalle de temps qui a été prédéterminé au préalable.

3. Procédé destiné à compter automatiquement le nombre de personnes dans une zone selon l'une quelconque des revendications 1 à 2, **caractérisé en ce que** ladite au moins une unité locale (1, 1' 1 ") diffuse le même LAC en continu.

4. Procédé destiné à compter automatiquement le nombre de personnes dans une zone selon l'une quelconque des revendications 1 à 2, **caractérisé en ce que** ladite au moins une unité locale (1, 1', 1 ") diffuse différents LAC à chaque fois.

5. Procédé destiné à compter automatiquement le nombre de personnes dans une zone selon l'une quelconque des revendications précédentes, **caractérisé en ce que** la zone de couverture (4, 4', 4") de ladite au moins une unité locale (1, 1', 1 ") est configurable à l'aide d'au moins un des paramètres suivants :
la puissance de transmission afin de modifier la portée ;
le schéma de rayonnement du système d'antennes afin de modifier la forme de la zone de couverture (4).

6. Procédé destiné à compter automatiquement le nombre de personnes dans une zone selon l'une quelconque des revendications précédentes, dans lequel il existe une pluralité d'unités locales (1, 1', 1 "), **caractérisé en ce qu'**il comprend la réception, au niveau d'une unité de traitement (2), des décomptes des différents numéros IMSI pour chaque zone de couverture (4, 4', 4") en provenance des différentes unités locales (1, 1', 1 "), le calcul du nombre estimé de personnes dans chaque zone de couverture correspondante (4, 4', 4") étant réalisé dans ladite unité de traitement (2) avec un accès à des informations additionnelles.

7. Procédé destiné à compter automatiquement le nombre de personnes dans une zone selon l'une quelconque des revendications précédentes, **caractérisé en ce que** les informations additionnelles englobent au moins l'un des éléments suivants :
le pourcentage des téléphones portables activés par rapport aux habitants dans le pays, la région, la ville ou le voisinage où l'unité locale correspondante (1, 1', 1") est localisée ;
la part de marché que représente l'opérateur de réseau mobile sélectionné dans le pays, la région, la ville ou le voisinage où l'unité locale correspondante (1, 1', 1") est localisée.

8. Système destiné à compter automatiquement le nombre de personnes dans une zone, lesdites personnes portant un téléphone portable activé, comprenant :
au moins une unité locale (1, 1', 1") équipée d'un moyen émetteur-récepteur radio cellulaire pour émettre et recevoir des signaux dans le spectre sous licence d'au moins un opérateur de réseau mobile, chaque unité locale (1, 1', 1") étant localisée au niveau d'une zone où des personnes sont destinées à être comptées, et étant configurée pour :
diffuser, sur une zone de couverture (4, 4', 4"), un LAC qui est différent de n'importe quel LAC des cellules radio réelles du réseau mobile dans les environs ;
établir un dialogue de mise à jour de localisation avec n'importe quel téléphone portable (3, 3', 3") qui répond à la diffusion du LAC, en obtenant de chaque téléphone portable répondant (3, 3', 3") son numéro IMSI ;
envoyer un message de rejet de mise à jour de localisation à chaque téléphone portable (3, 3', 3") dont le numéro IMSI a été obtenu ;
compter les différents numéros IMSI ayant été reçus ;
envoyer lesdites informations de comptage à une unité de traitement (2) ;
une unité de traitement (2) comprenant des moyens de calcul (7) configurés de façon à calculer un nombre estimé de personnes dans chaque zone de couverture (4, 4', 4") grâce à l'utilisation d'informations additionnelles, cas dans lequel ladite au moins une unité locale (1, 1', 1 ") n'est pas une station de base d'un quelconque réseau mobile.

9. Système destiné à compter automatiquement le nombre de personnes dans une zone selon la revendication 8, **caractérisé en ce que** ladite au moins une unité locale (1, 1', 1") est additionnellement configurée, lors du comptage des différents numéros IMSI reçus, de façon à éliminer les numéros IMSI dédoublés ayant été reçus au cours d'un intervalle de temps qui a été prédéterminé au préalable.

10. Système destiné à compter automatiquement le nombre de personnes dans une zone selon l'une quelconque des revendications 8 à 9, **caractérisé en ce que** ladite au moins une unité locale (1, 1', 1") est configurée de façon à diffuser le même LAC en continu.

11. Système destiné à compter automatiquement le nombre de personnes dans une zone selon l'une quelconque des revendications 8 à 9, **caractérisé en ce que** ladite au moins une unité locale (1, 1', 1 ") est configurée de façon à diffuser différents LAC à chaque fois.

12. Système destiné à compter automatiquement le nombre de personnes dans une zone selon l'une quelconque des revendications 8 à 9, **caractérisé en ce que** ladite au moins une unité locale (1, 1', 1 ") est configurée de façon à changer entre la diffusion du même LAC en continu et la diffusion de différents LAC à chaque fois, en fonction du type de comptage qui est réalisé.

13. Système destiné à compter automatiquement le nombre de personnes dans une zone selon l'une quelconque des revendications 8 à 12, **caractérisé en ce que** ladite au moins une unité locale (1, 1', 1") comprend des moyens pour configurer au moins l'un des paramètres suivants qui détermine sa zone de couverture correspondante (4, 4',4") :
la puissance de transmission afin de modifier la portée ;
le schéma de rayonnement du système d'antennes afin de modifier la forme de la zone de couverture (4).

14. Système destiné à compter automatiquement le nombre de personnes dans une zone selon l'une quelconque des revendications 8 à 13, dans lequel l'unité de traitement (2) est distante de ladite au moins une unité locale (1, 1', 1 "), **caractérisé en ce que** l'unité de traitement (2) comprend des moyens de gestion (8) configurés de façon à gérer à distance ladite au moins une unité locale (1, 1', 1").

15. Système destiné à compter automatiquement le nombre de personnes dans une zone selon l'une quelconque des revendications 8 à 14, **caractérisé en ce que** l'unité de traitement (2) comprend des moyens d'interface (9) par l'intermédiaire desquels des tiers (10) récupèrent de manière externe le calcul du nombre estimé de personnes dans chaque zone de couverture (4, 4', 4").
